# EUROPÄISCHE PATENTSCHRIFT

(11) **EP 2 070 686 B1**
(45) Veröffentlichungstag und Bekanntmachung des Hinweises auf die Patenterteilung: **03.11.2010**
(21) Anmeldenummer: 07024036.1
(22) Anmeldetag: 12.12.2007
(51) Int. Cl.: B29C 65/20, B29C 65/78

(54) **Vorrichtung und Verfahren zum Verschweissen von Kunststoffprofilteilen**
Device and method for welding plastic section pieces
Dispositif et procédé destinés au soudage de pièces de profilés en matière plastique

(43) Veröffentlichungstag der Anmeldung: 17.06.2009
(73) Patentinhaber: Rotox Besitz- und Verwaltungsgesellschaft mbH, 65611 Brechen (DE)
(72) Erfinder: Schmitt, Hans, 66877 Rammstein (DE)
(74) Vertreter: Müller, Eckhard

(56) Entgegenhaltungen:
- CA-A1- 2 464 177
- IT-B- 1 133 290

## Beschreibung

Die Erfindung betrifft eine Schweißvorrichtung sowie ein Verfahren zum Verschweißen von Kunststoffprofilteilen, welche insbesondere für Fenster- oder Türrahmen vorgesehen sind. Die Erfindung betrifft insbesondere das Verschweißen und Zusammenfügen von Profilteilen unter universellen und beliebig einstellbaren Winkeln zur Fertigung von Rahmen mit beliebiger Geometrie, wie etwa Rahmen mit einer Dreiecks- oder Trapezform.

### Hintergrund und Stand der Technik

Im Stand der Technik sind sogenannte Einkopf-Schweißmaschinen bekannt, welche zur Fertigung von Sonderelementen, wie etwa Fenster- oder Türrahmen in Dreiecks- oder Trapezform geeignet sind. Hierbei müssen die einzelnen, den Rahmen bildenden Profilteile unter beliebigen universell anpassbaren Winkeln zusammengefügt bzw. miteinander verschweißt werden.

Üblicherweise ist der Winkel, unter welchem zwei Profilteile miteinander verschweißt werden können in einem Bereich von 30° bis 180° an einer entsprechenden Schweißmaschine einstellbar. Derartige Schweißmaschinen weisen einen Schweiß- oder Werkzeugtisch auf, welcher eine Aufspannebene für die zu verschweißenden Profilteile definiert. An dem Schweiß- oder Werkzeugtisch sind zwei im Abstand voneinander angeordnete und beliebig ausrichtbare Aufspannteile vorgesehen, welche zur Aufnahme und/oder zur Befestigung von je einem Profilteil in der Aufspannebene ausgebildet sind. Die beiden Aufspannteile sind in der Aufspannebene verfahrbar, sodass die daran eingespannten Profilteile in vorgegebener Art und Weise zum einen mit einem Heizelement und zum anderen zur Bildung einer Schweißverbindung gegeneinander in Anlage- oder Kontaktstellung bringbar sind.

Für den Schweißvorgang ist es erforderlich, dass die Aufspannteile sowohl in Ausrichtung und in Position derart am Schweißtisch angeordnet sind, dass sie im Bereich der zu bildenden Schweißverbindung eine exakte Führung und einen entsprechenden Seitenanschlag für die zu verschweißenden Profilteile zur Verfügung stellen. Sobald jedoch der Winkel, unter denen die Profilteile miteinander zu verschweißen sind, einer Änderung unterliegt, muss sowohl die Ausrichtung des jeweiligen Aufspannteils als auch seine Position in Profillängsrichtung an den neuen Schweißwinkel angepasst werden. Die Aufspannteile bzw. deren Profilaufnahme, welche einen Anschlag für das zu verschweißende Profilteil bildet, werden hierbei mit ihrem der Schweißverbindung zugewandten Endabschnitt an Begrenzungsmesserkanten des Schweißtisches ausgerichtet.

### Bei sämtlichen im Stand der Technik bekannten

Schweißvorrichtungen erfolgt die Ausrichtung und Positionierung der Aufspannteile bzw. der daran angeordneten Profilaufnahmen jeweils separat und getrennt voneinander. Das heißt, an den Aufspannteilen bzw. am Schweiß- oder Werkzeugtisch sind jeweils gesonderte Einstell- und Befestigungsmittel vorgesehen, welche entweder eine Verstellung und Fixierung der Ausrichtung bzw. des Winkels der Aufspannteile am Werkzeugtisch ermöglichen oder lediglich dazu ausgebildet sind, die Positionierung, das heißt eine Verschiebung des Aufspannteils in Profillängsrichtung zu variieren und zu fixieren bzw. festzulegen.

Folglich sind für jedes Aufspannteil mindestens zwei separate Befestigungsmittel erforderlich, welche jeweils gesondert eine Winkelverstellung oder eine Längenverstellung des Aufspannteils am Schweißtisch erfordern.

Eine derartige Vorrichtung beschreibt beispielsweise auch die DE 2 300 626 A1. Diese Schweißvorrichtung weist zwei Aufspannteile mit zugehörigen Führungen auf, wobei die Führungen in beliebige Winkelstellungen geschwenkt und dort fixiert werden können, während für die Verschiebung der Aufspannteile gegenüber den Führungen mechanische Bewegungsmittel vorgesehen sind, mittels derer die Verschiebung der Aufspannteile in Profillängsrichtung eingestellt und fixiert werden kann.

Aus der CA 2 464 177 A1 ist eine Bearbeitungsvorrichtung zum Schneiden und Verschweißen von Regenrinnenprofilstücken bekannt, wobei an zwei gegeneinander zu verschiebenden Auflagetischen jeweils eine um eine Achse schwenkbare Aufnahme für die beiden miteinander zu verschweißenden Profilteile vorgesehen sind. Diese Aufnahmen sind um die zugeordnete Schwenkachse schwenkbar, welche senkrecht zur Tischebene verläuft.

Sämtliche bekannten Schweißvorrichtungen weisen den gemeinsamen Nachteil auf, dass zum Umrüsten der Vorrichtung für einen anderen Schweißwinkel für jedes der Aufspannteile zwei verschiedene Befestigungsmittel jeweils für die Winkelstellung und für die Positionierung in Profillängsrichtung gelöst und wieder befestigt werden müssen. Zudem erfolgt die Ausrichtung der Aufspannteile in Profillängsrichtung rein visuell an den in der Aufspannebene vorgesehen Begrenzungsmessern.

Das Umrüsten stellt daher mitunter hohe Anforderungen an das Bedienpersonal und geht aufgrund der Anzahl der beim Umrüsten zu betätigenden Einstell- und Fixiermittel mit einer entsprechend langen Rüstzeit einher, welche sich nachteilig auf die Taktzeit und die effektiv nutzbare Auslastung der Schweißvorrichtung auswirkt.

### Aufgabe

Der vorliegenden Erfindung liegt demgegenüber die Aufgabe zugrunde, eine eingangs beschriebene Vorrichtung zum Verschweißen von Kunststoffprofilteilen derart weiterzubilden, dass ein Umrüsten sowohl schneller, einfacher als auch präziser erfolgen kann. Darüber hinaus soll ein Verfahren zum Umrüsten einer Schweißvorrichtung angegeben werden, welche gegenüber dem eingangs beschriebenen Umrüstvorgang unter Einhaltung der vorgegebenen Präzision sowohl einfacher als auch zügiger durchführbar ist.

### Erfindung und vorteilhafte Wirkungen

Die erfindungsgemäße Vorrichtung zum Verschweißen von Kunststoffprofilteilen weist zumindest zwei Aufspannteile auf, welche zur Aufnahme und Befestigung von je einem Profilteil in eine Aufspannebene ausgebildet sind. Mittels dieser Aufspannteile können die daran anzulegenden Profilteile wahlweise mit einem Heizelement und hiernach mit ihren aufgeschmolzenen Profilenden gegeneinander in Kontakt gebracht oder aneinandergedrückt werden.

Zur Einstellung des Winkels, unter dem die Profilenden miteinander zu verschweißen sind, ist zumindest eines der Aufspannteile in der Aufspannebene bzw. in der Ebene des Schweißtisches schwenkbar gelagert und in Profillängsrichtung verschieblich angeordnet.

Erfindungsgemäß ist zumindest eine Fixiereinrichtung vorgesehen, die zur Fixierung des Aufspannteiles ausgebildet ist. Die Fixiereinrichtung stellt eine Fixierung des Aufspannteils hinsichtlich seiner Ausrichtung und seiner Position, insbesondere der Position in Profillängsrichtung sicher. Die Fixiereinrichtung dient somit der Arretierung und Befestigung der Winkelverstellung als auch der Positions- bzw. Längsverstellung des schwenkbar und verschiebbar am Schweißtisch befestigten Aufspannteils.

Von besonderem Vorteil ist es hierbei, dass die Fixiereinrichtung mittels einer einzelnen Betätigung das zugehörige Aufspannteil sowohl hinsichtlich seiner Ausrichtung als auch hinsichtlich seiner Verschiebeposition zuverlässig fixiert.

Das Umrüsten der Schweißvorrichtung zum Einstellen eines vorgegebenen Winkels zwischen den miteinander zu verschweißenden Kunststoffprofilteilen kann mit Hilfe der Fixiereinrichtung sowohl einfacher als auch zügiger durchgeführt werden. So kann die Fixiereinrichtung in eine Löse- oder Freigabestellung überführt werden, in welcher das Aufspannteil in der Aufspannebene beliebig verschwenkt und verschoben werden kann.

Sobald das Aufspannteil in die vorgegebene Position und Ausrichtung überführt ist, kann durch Aktivieren der Fixiereinrichtung das Aufspannteil sowohl hinsichtlich seiner Ausrichtung als auch seiner Position am Schweiß- oder Werkzeugtisch fixiert werden. Die Fixiereinrichtung nimmt hierbei eine Fixier- oder Arretierstellung ein. Dadurch, dass sowohl zum Positionieren als auch Ausrichten der Aufspannteile nur noch eine einzige Fixiereinrichtung zu betätigen ist, kann die Rüstzeit verkürzt und die Handhabung der Schweißvorrichtung insgesamt vereinfacht werden.

Nach einer ersten Weiterbildung der Erfindung weist das Aufspannteil eine in der Aufspannebene an einem Schweißtisch schwenkbar angeordnete Stellleiste und eine entlang der Stellleiste verfahrbare Profilaufnahme auf. Die Fixiereinrichtung ist hierbei sowohl zur Fixierung der Winkelstellung der Stellleiste als auch zur Fixierung der Position der Profilaufnahme an der Stellleiste ausgebildet. Die Fixiereinrichtung stellt somit ein mechanisches Fixiermittel sowohl für die Stellleiste als auch für die an der Stellleiste entlang verfahrbare Profilaufnahme dar.

In besonders vorteilhafter Weise ist die Fixiereinrichtung in einer unmittelbaren Wirkverbindung mit der Stellleiste und/oder mit dem Schweißtisch. Eine mechanische Wirkverbindung zwischen der Fixiereinrichtung und der Profilaufnahme erfolgt vorzugsweise mittelbar über die Stellleiste und/oder über den Schweißtisch.

Es ist insbesondere vorgesehen, dass die Fixiereinrichtung kraftschlüssig mit dem Schweißtisch, der Stellleiste und/oder mit der Profilaufnahme in Wirkverbindung steht. Die Fixiereinrichtung ist hierbei vorzugsweise zur Ausbildung einer Klemmwirkung auf die Stellleiste ausgebildet.

Nach einer Weiterbildung der Erfindung ist vorgesehen, dass die der Profilierung des zu bearbeitenden Profils angepasste Profilaufnahme an einem entlang der Stellleiste verfahrbaren Halter befestigbar ist. Dieser Halter ist vorzugsweise U-profilartig ausgebildet und umgreift mit seinen Schenkeln die Stellleiste zumindest bereichsweise. Dieses bereichsweise Umgreifen der Stellleiste ermöglicht eine Verschiebung des Halters entlang der Stellleiste. Die Stellleiste dient somit als Führungsschiene für den in Profillängsrichtung verfahrbaren Halter.

Weiterhin ist vorgesehen, dass die Stellleiste am Schweißtisch um einen Anlenkpunkt schwenkbar gelagert und mittels der Fixiereinrichtung an einer der Schwenkbewegung angepassten Bogennut oder Kulisse fixierbar ist. Die Bogennut oder Kulisse ist hierbei vorzugsweise im Schweißtisch ausgebildet. Die Anordnung der Fixiereinrichtung an der Stellleiste, die Anlenkung der Stellleiste am Schweißtisch und die Geometrie der im Schweißtisch ausgebildeten Kulisse sind hierbei aufeinander abgestimmt.

Nach einer weiteren vorteilhaften Ausgestaltung der Erfindung ist vorgesehen, dass der Halter mit seinen sich von der Aufspannebene nach oben erstreckenden Schenkeln seines U-profilartigen Querschnittsprofils die Stellleiste von unten, das heißt von der Aufspannebene her seitlich umfasst. Dabei kommt der die beiden Schenkel miteinander verbindende Profilboden des U-profilartig ausgebildeten Halters zwischen der Stellleiste und dem Schweißtisch zu liegen.

Eine Fixierung oder Arretierung des Halters und der daran angeordneten Aufnahme bezüglich der Stellleiste erfolgt mittels Klemmung zwischen Stellleiste und Schweißtisch. Die Klemmwirkung wird dabei von der Fixiereinrichtung zur Verfügung gestellt, welche zur Ausbildung einer zur Flächennormalen der Aufspannebene auf die Stellleiste wirkenden Klemmkraft ausgebildet ist.

In der Freigabe- bzw. Lösestellung der Fixiereinrichtung ist die Stellleiste um den Anlenkpunkt beliebig schwenkbar und der die Stellleiste bereichsweise umgreifende, zwischen Stellleiste und Aufspanntisch bzw. Schweißtisch zu liegen kommende Halter kann entlang der Stellleiste beliebig verschoben bzw. verfahren werden. Durch die von der Fixiereinrichtung zur Verfügung gestellte Klemmwirkung wird einerseits der zwischen Stellleiste und Schweißtisch befindliche Halter eingeklemmt und andererseits die Stellleiste selbst bezüglich ihrer Schwenkposition am Schweißtisch arretiert.

Weiterhin ist vorgesehen, die Fixiereinrichtung an der Stellleiste in Höhe der Bogennut oder Kulisse anzuordnen und/oder mit einem vorzugsweise senkrecht zur Aufspannebene beweglichen Fixierelement zu versehen. Das Fixierelement ist insbesondere zum Durchgreifen oder Durchsetzen der Bogennut oder Kulisse vorgesehen und dient der Kraftübertragung zwischen Fixierelement und Aufspannebene bzw. Schweißtisch. Das Fixierelement kann hierbei als ein parallel zur Flächennormalen des Schweißtischs verfahrbarer Kolben oder Zugstange ausgebildet sein mit einem an der Unterseite des Schweißtisches zu liegen kommenden verbreiterndem Kopf.

Bei Aktivierung der Fixiervorrichtung wird der die Bogennut oder Kulisse durchsetzende verbreiterte Kopf in Richtung zur Fixiereinrichtung gezogen, wodurch eine Klemmwirkung zwischen Stellleiste, Halter und Schweißtisch erzeugt werden kann.

Nach einer Weiterführung der Erfindung ist vorgesehen, die Fixiereinrichtung hydraulisch, pneumatisch und/oder mechanisch, etwa in Form hydraulischer oder pneumatischer Zylinder oder Kolben oder etwa in Form einer Gewindespindel auszubilden. Weiterhin ist vorgesehen, die Fixiereinrichtung mittels einer Steuereinrichtung elektrisch zu betätigen.

Es ist weiterhin von Vorteil, wenn die erfindungsgemäße Schweißvorrichtung zwei gleichermaßen ausgestaltete Aufspannteile mit je einer Stellleiste, einer Profilaufnahme und einem dafür vorgesehenen beweglichen Halter aufweist. Dabei ist es insbesondere von Vorteil, wenn beide Aufspannteile jeweils mit der erfindungsgemäßen Fixiereinrichtung versehen sind, welche an den beiden Aufspannteilen separat voneinander in einfacher Art und Weise, beispielsweise lediglich durch Knopfdruck bedienbar und aktivierbar oder deaktivierbar sind.

Des Weiteren kann vorgesehen werden, die Schwenk- oder Verfahrbewegung der Aufspannteile mittels dafür vorgesehener Stellantriebe selbsttätig durchzuführen.

Nach einer besonders vorteilhaften Ausbildung der Erfindung ist des Weiteren ein verstellbarer Anschlag vorgesehen, welcher in eine Anschlagsposition überführbar ist. In dieser erstreckt sich der Anschlag zumindest bereichsweise lotrecht zur Aufspannebene. Er erfüllt dabei eine Doppelfunktion indem er einerseits einen Endanschlag und somit eine Justierhilfe für die Aufspannteile beim Umrüsten der Vorrichtung und andererseits einen Anschlag zur Positionierung der miteinander zu verbindenden Profile im Betrieb der Vorrichtung zur Verfügung stellt. Dabei ist insbesondere vorgesehen, dass der Anschlag in seiner Anschlagsposition seitlich mit den Kanten von Begrenzungsmessern in Anlagestellung gelangt, welche in der oder parallel versetzt zur Aufspannebene verlaufen und vorzugsweise senkrecht zu ihrer Längserstreckung zueinander beweglich sind.

Die beiden Begrenzungsmesser sind im Randbereich von gegeneinander verfahrbaren Platten angeordnet, die den Schweißtisch und somit die Aufspannebene bilden. Beim Justieren des Endanschlags ist dabei insbesondere vorgesehen, dass die einander gegenüberliegenden Begrenzungsmesserkanten am Anschlag zumindest bereichsweise beidseitig in Kontaktstellung zu liegen kommen.

In dieser Justier- oder Anlagestellung erfüllt der Anschlag einen Doppelfunktion indem er einerseits die Positionierung und/oder Ausrichtung des zumindest einen Aufspannteils und andererseits auch die Positionierung und/oder Ausrichtung der miteinander zu verbindenden Profile in der Aufspannebene festlegt oder vorgibt. Dabei ist stets vorgesehen, die Aufspannteile beim Umrüsten und die Profilteile unmittelbar vor einem Schweißvorgang im Betrieb der Vorrichtung in Anlagestellung mit dem Anschlag zu bringen.

Der Anschlag kann dabei hinsichtlich seiner geometrischen Abmessungen ähnlich oder identisch zum Schweißspiegel ausgebildet sein.

Nach einer weiteren Ausführung ist vorgesehen, dass die Schwenkachse zumindest eines, vorzugsweise beider Aufspannteile und/oder der zugehörigen Stellleisten fluchtend mit einer Kante eines in der Aufspanneben vorgesehenen Begrenzungsmessers zu liegen kommt bzw. kommen. Vorteilhaft bei dieser Anordnung ist, dass beim Umrüsten der Vorrichtung, insbesondere beim Einstellen eines anderen Schweißwinkels für die zu verbindenden Profilteile, lediglich eine Schwenkbewegung des entsprechenden Aufspannteils und seiner zugehörigen Stellleiste durchzuführen ist. Die Positionierung eines Halters für die Profilaufnahme bzw. die Verschiebung der Profilaufnahme in Längsrichtung bezüglich der Stellleiste kann in vorteilhafter Weise entfallen.

Nach einem weiteren unabhängigen Aspekt betrifft die Erfindung ein Verfahren zum Umrüsten einher zum Verschweißen von Kunststoffprofilteilen vorgesehenen Schweißvorrichtung. Das Umrüsten dient vor allem der Einstellung eines vorgegebenen Winkels, unter dem die Profilteile miteinander zu verschweißen sind. Demgemäß ist zumindest eines der in der Aufspannebene vorgesehenen Aufspannteile dem vorgegebenen Schweißwinkel entsprechend zu verschwenken. Das erfindungsgemäße Verfahren zum Umrüsten der Schweißvorrichtung sieht nun vor, das Aufspannteil hinsichtlich seiner Ausrichtung als auch hinsichtlich seiner Position in Profillängsrichtung zu verschwenken bzw. zu verschieben und dabei mit einem Endabschnitt in eine Anlagestellung mit einem Anschlag zu bringen.

Sobald das Aufspannteil in die gewünschte Winkelposition geschwenkt und gegen den Anschlag geschoben ist, wird es mittels einer Fixiereinrichtung sowohl bezüglich seiner Position als auch bezüglich seiner Ausrichtung in der Aufspannebene fixiert. Hiernach kann die Schweißvorrichtung in den Bestückungs- oder Belademodus überführt werden. Typischerweise wird hierbei der Schweißtisch in eine Arbeitsposition gefahren, in welcher die miteinander zu verschweißenden Profile an den Aufspannteilen angelegt und mittels geeigneter Fixier- oder Spanneinrichtungen am Tisch befestigt werden, bevor der eigentliche Schweißvorgang initiiert wird.

Nach einer Weiterbildung ist vorgesehen, dass der Anschlag sowohl zur Ausrichtung der Aufspannteile als auch zur Ausrichtung der zu verschweißenden Profile bei der Bestückung der Schweißvorrichtung verwendet wird. Der Anschlag, mit welchem die Aufspannteile, insbesondere die Profilaufnahmen in eine Anschlagstellung beim Umrüsten der Vorrichtung gebracht werden, schließt im Wesentlichen bündig oder fluchtend mit den Kanten der im Schweißtisch vorgesehenen Begrenzungsmesser ab. Der Anschlag kommt vorzugsweise beidseitig an den Begrenzungsmessern des Schweißtisches zu liegen und er erstreckt sich vorzugsweise im Wesentlichen senkrecht zur Aufspannebene.

Beim Umrüsten der Schweißvorrichtung erfolgt das Ausrichten der Aufspannteile, insbesondere der Profilaufnahme nicht mehr visuell an den Begrenzungsmessern, sondern die Aufspannteile und die daran angeordneten Profilaufnahmen können in einfacher Art und Weise gegen den Anschlag geschoben werden. Die Verwendung eines solchen Anschlages anstelle der visuellen und fluchtenden Ausrichtung der Aufspannteile an den Begrenzungsmesserkanten erleichtert und beschleunigt den Umrüstvorgang ungemein und ist obendrein bedienerfreundlicher, da sich das Bedienpersonal beim Umrüsten der Schweißvorrichtung zur Inaugenscheinnahme der fluchtenden Anordnung von Aufspannteil und Begrenzungsmesserkante nicht mehr über den Schweißtisch beugen muss.

Weiterhin ist vorgesehen, dass der Schweißtisch zur Ausrichtung der Aufspannteile in eine Rüstposition gefahren wird und dass der Schweißtisch zum Einlegen der zu verschweißenden Profilteile in eine davon abweichende Arbeitsposition gefahren wird. Die Rüstposition und die Arbeitsposition des Tisches unterscheiden sich im Wesentlichen um die Schweißzugabe, um welche die miteinander zu verschweißenden Profilenden beim Erwärmen bzw. Verschweißen abgeschmolzen werden.

### Ausführungsbeispiele

Weitere Ziele, Vorteile und vorteilhafte Anwendungsmöglichkeiten der Erfindung ergeben sich aus der nachfolgenden Beschreibung von Ausführungsbeispielen anhand der Zeichnungen.

Es zeigen:
- Figur 1: die erfindungsgemäße Schweißvorrichtung mit Aufspannteil in einer 90°-Stellung in Aufsicht,
- Figur 2: die Vorrichtung gemäß Figur 1 mit Aufspannteilen in einer 180°-Anordnung,
- Figur 3: einen Querschnitt C-C durch die Vorrichtung gemäß Figur 2,
- Figur 4: eine Querschnittsdarstellung A-A gemäß Figur 2,
- Figur 5: eine Konfiguration der Vorrichtung für kleine Schweißwinkel,
- Figur 6: eine perspektivische Darstellung der Schweißvorrichtung mit ausgefahrenem Anschlag und
- Figur 7: die Vorrichtung gemäß Figur 6 in Draufsicht.

Die in den Figuren dargestellte Schweißvorrichtung für Kunststoffprofilteile weist einen, eine Aufspannebene definierenden Schweiß- oder Werkzeugtisch auf. Der Schweißtisch hat zwei translatorisch gegeneinander verfahrbare Platten 10, 12, an denen jeweils ein Aufspannteil 2, 4 angeordnet ist. Die Aufspannteile 2, 4 sind um ein Lager oder einen Drehpunkt 32, 34 in der Tischebene schwenkbar angeordnet. An jedem Aufspannteil 2, 4 ist zudem eine Fixiereinrichtung 36, 38 vorgesehen, welche mit jeweils einer kulissenartig ausgebildeten Bogennut 18, 19 zur Fixierung von sowohl Ausrichtung als auch Position der Aufspannteile 2, 4 und ihrer Komponenten 20, 22, 24, 26, 28, 30 zusammenwirkt.

In der Tischebene sind zwei aneinanderstoßende und gegeneinander verfahrbare Begrenzungsmesser 14, 16 angeordnet, welche die beim Schweißen entstehende Schweißraupe an der oberen und/oder unteren Sichtfläche des Rahmens begrenzen bzw. abscheren. An dem Aufspannteil 2, 4 ist jeweils eine Profilaufnahme 28, 30 angeordnet. Diese hat ein dem zu verschweißenden Profil entsprechendes Querschnittsprofil und ermöglicht die sichere und präzise Ausrichtung der beiden miteinander zu verschweißenden Profilteile an den Tischplatten 10, 12, bevor diese mittels nicht explizit dargestellter Spannvorrichtungen am Schweißtisch fixiert werden.

Die Profilaufnahmen 28, 30 sind ihrerseits an einem entlang einer Stellleiste 20, 22 der Aufspannteile 2, 4 verfahrbaren Halter 24, 26 befestigt. Die Längsverschieblichkeit der Halter 24, 26 und der daran angeordneten Profilaufnahmen 28, 30 ist für die präzise Ausrichtung der Profilaufnahme 28, 30 erforderlich. Deren zu den Profilteilen gewandte innenliegende und zur Schweißverbindung hin gerichteten Endabschnitte kommen bei korrekter Justage bündig mit der zugeordneten Begrenzungsmesserkante 14, 16 zu liegen.

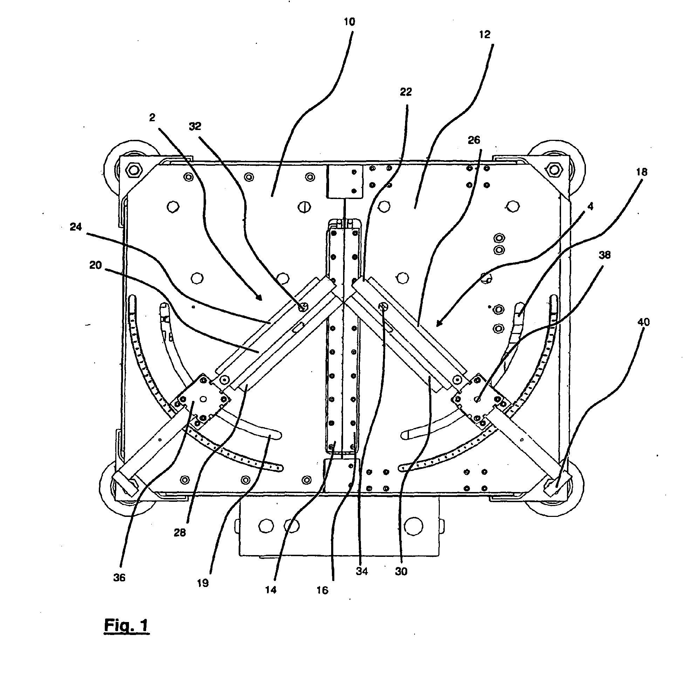

Wenn die beiden Tischplatten 10, 12 am Ende des Schweißvorgangs in die geschlossene Anschlagstellung fahren, wie sie beispielsweise in den Figuren 1, 2 und 5 dargestellt ist, gelangen auch die nach innen gewandten und zum verschweißenden Eck hin gerichteten Kanten der Profilaufnahmen 28, 30 unmittelbar in eine Anlagestellung miteinander.

Wenn der Winkel, unter welchem die einzulegenden Profilteile miteinander verschweißt werden, geändert werden soll, wird jeweils die an den beiden Stellleisten 20, 22 angeordnete Fixiereinrichtung 36, 38 in ihre Löse- oder Freigabestellung überführt. Sie gibt dann die Schwenkbewegung der an den Anlenkpunkten 32, 34 jeweils gelagerten Stellleisten 20, 22 frei. Die Stellleisten 20, 22, die daran verfahrbar angeordneten Halter 24, 26 und die daran gehaltenen Profilaufnahmen 28, 30 können so auf den geforderten Schweißwinkel eingestellt und entsprechend verschwenkt werden.

Zugleich kann eine translatorische Linearbewegung des Halters 24, 26 entlang der Stellleisten 20, 22 erfolgen. Durch die geometrische Ausgestaltung und spezielle Anordnung von Tischplatte 10, 12, Stellleiste 20, 22, Halter 24, 26 und den Fixiereinrichtungen 36, 38 kann mit einem einzigen Feststell-und Fixiermittel 36, 38 sowohl die Schwenkbewegung als auch die Positionierung der Profilaufnahmen 28, 30 in Profillängsrichtung arretiert und sicher fixiert werden.

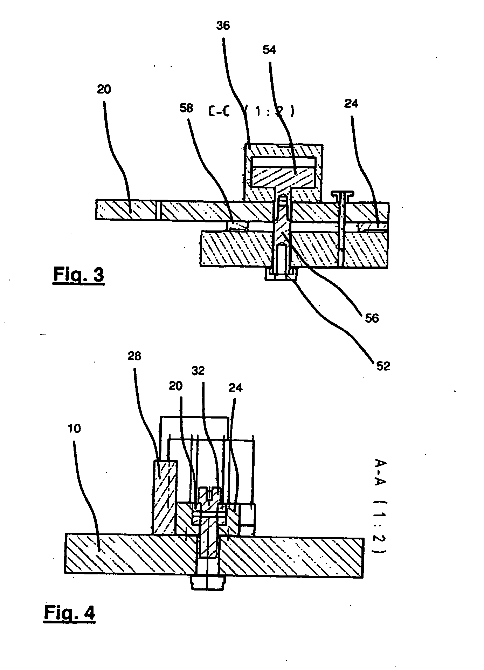

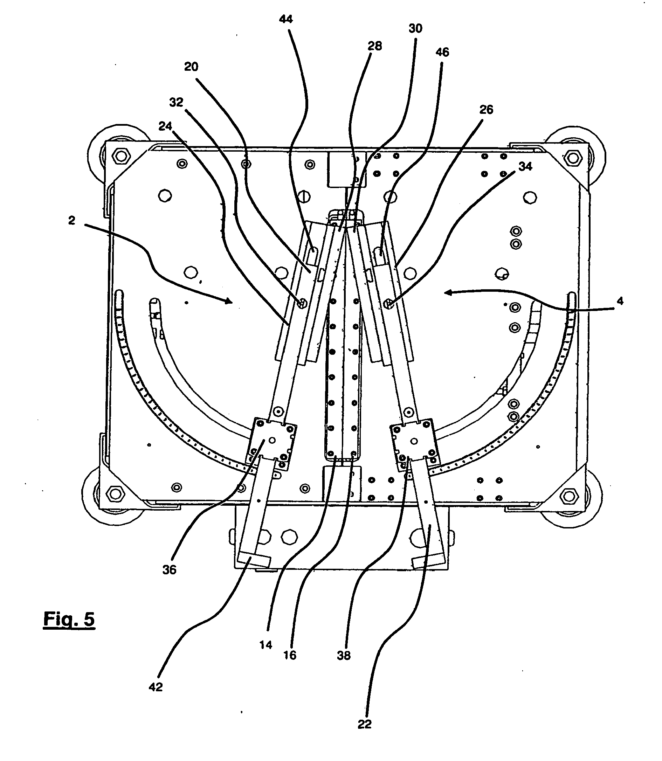

Wie anhand der Figur 4 verdeutlicht, hat der Halter 24 ein U-förmiges Profil mit Schenkeln, die die Stellleiste 20 zumindest von unten und seitlich umfassen. Der die beiden Schenkel des U-förmigen Profils des Halters 24 verbindende Steg kommt zwischen Stellleiste 20 und der Oberseite des Schweißtisches 10 zu liegen. Mittels eines in dem Verbindungssteg des Halters 24, 26 ausgebildeten und in Figur 5 dargestellten Langlochs 44, 46 kann der Halter 24, 26 auch im Bereich des Anlenkpunktes 32, 34 in Profillängsrichtung, das heißt entlang der Längserstreckung der Stellleisten 20, 22 verschoben werden.

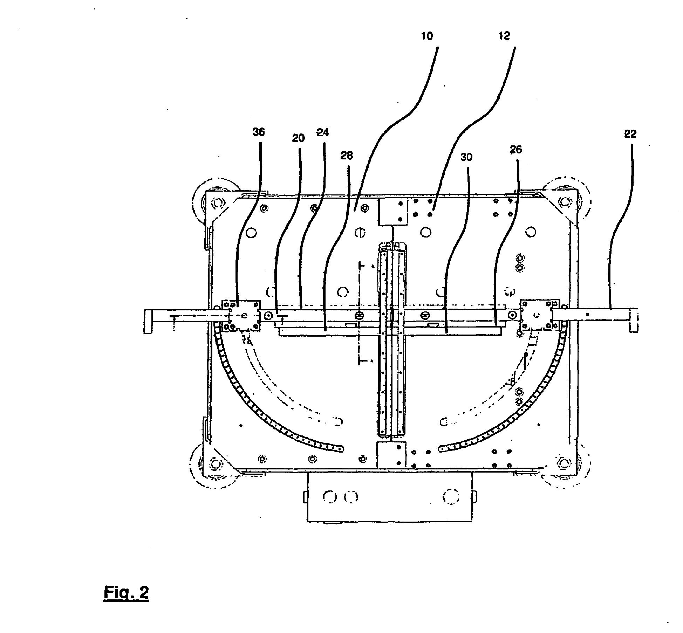

In den Figuren 2 und 5 sind jeweils extreme Positionen der entlang der Stellleisten 20, 22 verschiebbaren Halter 24, 26 und der daran angeordneten Profilaufnahmen 28, 30 gezeigt. Bei kleinen Schweißwinkeln, wie sie beispielsweise mit einer Konfiguration gemäß Figur 5 erzielbar sind, werden die Halter 24, 26 relativ weit zum zu bildenden Schweißeck hin verschoben, während in der in Figur 2 gezeigten Konfiguration die Halter 24, 26 und die daran angeordneten Profilaufnahmen 28, 30 näher zur jeweiligen Fixiereinrichtung 36, 38 angeordnet sind.

Die Wirkverbindung zwischen der Fixiereinrichtung 36 und dem Schweiß- oder Werkzeugtisch 10 wird anhand der Querschnittsdarstellung gemäß Figur 3 erläutert. Die Fixiereinrichtung 36, welche vorzugsweise als Hydraulik- oder Pneumatikzylinder ausgebildet ist, aber auch durchaus als mechanischer Spindeltrieb verwirklicht werden kann, weist einen senkrecht zur Tischebene verfahrbaren Kolben 54 auf, welcher mit einem Fixierelement 56 die am Tisch vorgesehene Kulisse 18, 19 durchsetzt oder durchgreift und mit einem verbreiterndem Kopf 52 an der Unterseite des Tisches 10 angreift.

Bei Aktivierung der Fixiereinrichtung wird der Kolben 54 in die Fixiereinrichtung 36 hineingezogen, sodass der verbreiterte Kopf 52 eine Zugkraft auf den Tisch 10 ausübt. Hierdurch wird zwischen der Stellleiste 20 und dem Werkzeugtisch 10 eine Klemmung hervorgerufen, mittels welcher der zwischen Stellleiste 20 und Tisch 10 befindliche Halter 24 in seiner Position fixiert und arretiert wird. Auf diese Art und Weise kann mittels der Fixiereinrichtung 36 die Profilaufnahme 28 sowohl hinsichtlich ihrer Ausrichtung am Tisch als auch ihrer Positionierung mit einer einzigen Klemm-oder Fixiermaßnahme sicher und präzise gehalten werden.

Die Aktivierung oder Deaktivierung der Fixiereinrichtung erfolgt entweder manuell oder elektrisch über eine Steuervorrichtung. Der Bediener der Schweißvorrichtung kann beispielsweise durch Knopfdruck die Fixierung lösen oder aktivieren. Die Betätigung der beiden Fixiereinrichtungen 36, 38 erfolgt vorzugsweise separat und getrennt voneinander. Sie kann aber auch miteinander gekoppelt werden, sodass durch Betätigung eines einzigen Betätigungselements beide Fixiereinrichtungen 36, 38 entweder gleichzeitig oder mit zeitlicher Verzögerung von einer Fixier- in eine Lösestellung überführt werden können und umgekehrt.

Zwischen Stellleiste 20 und dem Werkzeugtisch 10 ist in Radialrichtung außerhalb der Kulisse oder Bogennut 18, 19 des Tischs 10, 12 jeweils ein Abstandselement 58 vorgesehen, damit bei Aktivierung der Fixiereinrichtung 36 die Stellleiste 20 möglichst keinen Verbiegungen oder mechanischen Deformationen unterliegt.

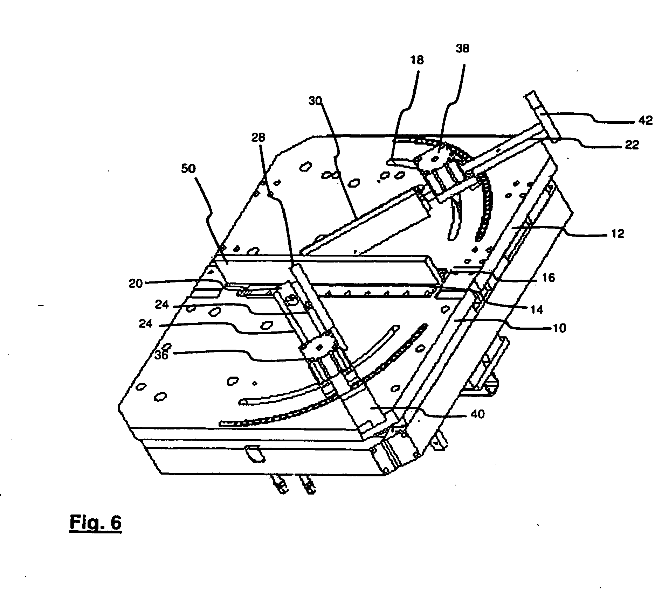

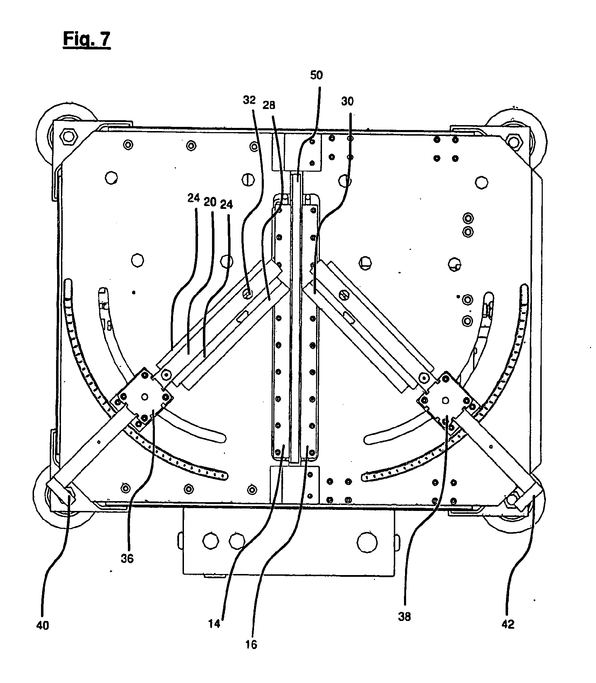

In den Figuren 6 und 7 ist das Ausrichten der Profilaufnahme 28, 30 zueinander und insbesondere zu den Kanten der Begrenzungsmesser 14, 16 gezeigt. Hierzu wird ein, sich im Wesentlichen senkrecht zur Tischebene erstreckender Anschlag 50 zwischen den leicht geöffneten Tisch 10, 12 gefahren. Er wird zwischen den Begrenzungsmessern 14, 16 eingeklemmt, sodass die länglichen Seitenflächen des Anschlags 50 der Position der vorderen Kante der Begrenzungsmesser 14, 16 entsprechen.

Zum Ausrichten der Profilaufnahmen 28, 30, insbesondere in Profillängsrichtung werden diese mit ihrer vorderen, dem verschweißenden Eck und den anzulegenden Profile zugewandten Kante von beiden Seiten an den Anschlag 50 herangeführt. Durch die Verwendung des Anschlags 50 ist sichergestellt, dass die Profilaufnahmen 28, 30 mit ihren vorderen innenliegenden Kanten bündig oder fluchtend mit den Begrenzungsmesserkanten 14, 16 abschließen.

Nachdem die Profilaufnahmen 28, 30 und die Halter 24, 26 mittels der Fixiereinrichtungen 36, 38 bezüglich ihrer Ausrichtung und Position am jeweiligen Tischabschnitt 10, 12 fixiert sind, wird der Tisch 10, 12 von der in den Figuren 6 und 7 gezeigten Rüstposition in eine nicht explizit dargestellte Arbeitsposition überführt. Die Arbeitsposition und die gezeigte Rüstposition unterscheiden sich in der Position der Tischabschnitte 10, 12 um die vorbestimmte Schweißzugabe der einzulegenden Profilteile, um welche diese beim Aufheizen oder Verschweißen abgeschmolzen werden.

An dem den Lagerpunkten 32, 34 abgewandten Endabschnitt der Stellleisten 20, 22 sind jeweils verstellbare Längenanschläge 40, 42 vorgesehen, sodass die miteinander zu verschweißenden Profilteile beim Einlegen in die Schweißvorrichtung zwischen den hinteren Anschlägen 40, 42 und der Anschlagsplatte 50 eingespannt oder zumindest daran angelegt werden können. Die Verspannung und Fixierung der Profilleiste erfolgt letztlich über eine in den Zeichnungen nicht explizit dargestellte Spannvorrichtung, welche die Profilleisten von oben auf den Schweißtisch 10, 12 drückt.

### Bezugszeichenliste

- 10: Tischplatte
- 12: Tischplatte
- 14: Begrenzungsmesser
- 16: Begrenzungsmesser
- 18: Kulisse, Bogennut
- 19: Kulisse, Bogennut
- 20: Stellleiste
- 22: Stellleiste
- 24: Halter
- 26: Halter
- 28: Profilaufnahme
- 30: Profilaufnahme
- 32: Lager
- 34: Lager
- 36: Fixiereinrichtung
- 38: Fixiereinrichtung
- 40: Anschlag
- 42: Anschlag
- 44: Langloch
- 46: Langloch
- 50: Anschlag
- 52: Kopf
- 54: Kolben
- 56: Fixierelement
- 58: Abstandselement

## Patentansprüche

1. Vorrichtung zum Verschweißen von Kunststoffprofilteilen mit zumindest zwei Aufspannteilen (2, 4), welche zur Aufnahme und Befestigung von je einem Profilteil in einer Aufspannebene (10, 12) ausgebildet sind, und mittels derer die zu verschweißenden Profile wahlweise mit einem Heizelement und mit ihren Profilenden gegeneinander in Kontakt bringbar sind, wobei zur Einstellung des Winkels, unter denen die Profilenden miteinander zu verschweißen sind, zumindest eines der Aufspannteile in der Aufspannebene (10, 12) schwenkbar und in Profillängsrichtung verschieblich ist, **dadurch gekennzeichnet, dass** zumindest eine Fixiereinrichtung (36, 38) vorgesehen ist, welche sowohl zur Fixierung der Ausrichtung und der Position des Aufspannteiles (2, 4) ausgebildet ist.

2. Vorrichtung nach Anspruch 1, wobei das zumindest eine Aufspannteil (2, 4) eine in der Aufspannebene an einem Schweißtisch (10, 12) schwenkbar angeordnete Stellleiste (20, 22) und eine entlang der Stellleiste verfahrbare Profilaufnahme (28, 30) aufweist, wobei die Fixiereinrichtung (36, 38) zur Fixierung von sowohl der Winkelstellung der Stellleiste (20, 22) als auch der Position der Profilaufnahme an der Stellleiste (20, 22) ausgebildet ist.

3. Vorrichtung nach Anspruch 2, wobei die auswechselbare und auf das jeweils zu bearbeitende Profil anpassbare Profilaufnahme (28, 30) an einem entlang der Stellleiste (20, 22) verfahrbaren Halter (24, 26) befestigbar ist.

4. Vorrichtung nach Anspruch 3, wobei der Halter (24, 26) U-profilartig ausgebildet ist und mit seinen Schenkeln die Stellleiste (20, 22) zumindest bereichsweise umgreift.

5. Vorrichtung nach Anspruch 4, wobei die Stellleiste (20, 22) am Schweißtisch (10, 12) um einen Anlenkpunkt (32, 34) schwenkbar gelagert und mittels der Fixiereinrichtung (36, 38) an einer der Schwenkbewegung angepassten Bogennut oder Kulisse (18, 19) fixierbar ist.

6. Vorrichtung nach einem der vorhergehenden Ansprüche 3 bis 5, wobei der Halter (24, 26) mit seinen sich von der Aufspannebene (10, 12) nach oben erstreckenden Schenkeln die Stellleiste (20, 22) von unten seitlich umfasst und mit seinem die Schenkel verbindenden Profilboden zwischen Stellleiste (20, 22) und Schweißtisch (10, 12) zu liegen kommt und wobei eine Fixierung des Halters (24, 26) bezüglich der Stellleiste (20, 22) mittels Klemmung zwischen Stellleiste (20, 22) und Schweißtisch (10, 12) erfolgt.

7. Vorrichtung nach Anspruch 5 oder 6, wobei die Fixiereinrichtung (36, 38) an der Stellleiste (20, 22) in Höhe der Bogennut (18, 19) angeordnet ist und mit einem Fixierelement (56) die Bogennut (18, 19) durchgreifend zur Ausübung einer im Wesentlichen senkrecht zur Aufspannebene (10, 12) auf die Stellleiste (20, 22) einwirkenden Klemmkraft (20, 22) ausgebildet ist.

8. Vorrichtung nach einem der vorhergehenden Ansprüche, wobei die Fixiereinrichtung (34, 36) hydraulisch, pneumatisch und/oder mechanisch ausgebildet und mittels einer Steuereinrichtung elektrisch betätigbar ist.

9. Vorrichtung nach einem der vorhergehenden Ansprüche, wobei ein verstellbarer und sich im Wesentlichen senkrecht zur Aufspannebene (10, 12) erstreckender Anschlag (50) zur Positionierung und/oder Ausrichtung des zumindest einen Aufspannteils (2, 4) und zur Positionierung und/oder Ausrichtung der miteinander zu verbindenden Profile in der Aufspannebene (10, 12) vorgesehen ist.

10. Vorrichtung nach einem der vorhergehenden Ansprüche, wobei zumindest eine Schwenkachse des Aufspannteils (2, 4) oder der zugehörigen Stellleiste (20, 22) mit der vorderen Kante eines der Aufspannebene oder deren Platten (10, 12) zugeordneten Begrenzungsmessers (14, 16) zusammenfällt.

11. Verfahren zum Umrüsten einer zum Verschweißen von Kunststoffprofilteilen vorgesehenen Schweißvorrichtung gemäß einem der vorhergehenden Ansprüche, wobei zum Einstellen des Winkels unter dem die Profilteile miteinander zu verschweißen sind, zumindest eines der Aufspannteile (2, 4) in der Aufspannebene (10, 12) dem vorgesehenen Schweißwinkel entsprechend verschwenkt wird, **dadurch gekennzeichnet, dass** das Aufspannteil (2, 4) in Profillängsrichtung verschoben und in Anlagestellung mit einem Anschlag (50) gebracht wird und mittels einer Fixiereinrichtung (36, 38) sowohl bezüglich Ausrichtung und auch Position fixiert wird.

12. Verfahren nach Anspruch 11, wobei der Anschlag (50) sowohl zur Ausrichtung der Aufspannteile (2, 4) als auch zur Ausrichtung der zu verschweißenden Profile (50) verwendet wird.

13. Verfahren nach einem der Ansprüche 11 oder 12, wobei der Schweißtisch (10, 12) zur Ausrichtung der Aufspannteile (2, 4) in eine Rüstposition gefahren wird und zum Einlegen der zu verschweißenden Profilteile in eine Arbeitsposition gefahren wird, wobei sich Rüstposition und Arbeitsposition des Tisches (10, 12) um eine vorbestimmte Schweißzugabe unterscheiden, um welche die Profilenden beim Verschweißen abgeschmolzen werden.

## Claims

1. Device for welding plastics material profile members, comprising at least two clamping parts (2, 4), which are each constructed for reception and fastening of a respective profile member in a clamping plane (10, 12) and by means of which the profile members to be welded can be selectably brought into contact with a heating element and with one another by the profile member ends thereof, wherein for setting of the angle at which the profile member ends are to be welded together at least one of the clamping parts is pivotable in the clamping plane (10, 12) and displaceable in profile member longitudinal direction, **characterised in that** at least one fixing device (36, 38) is provided, which is constructed for fixing both the alignment and the position of the clamping part (2, 4).

2. Device according to claim 1, wherein the at least one clamping part (2, 4) comprises a setting strip (20, 22), which is pivotable arranged in the clamping plane at a welding table (10, 12), and a profile member mount (28, 30), which is movable along the setting strip, wherein the fixing device (36, 38) is constructed for fixing not only the angular setting of the setting strip (20, 22), but also the position of the profile member mount at the setting strip (20, 22).

3. Device according to claim 2, wherein the exchangeable profile member mount (28, 30), which is adaptable to the respective profile member to be processed, is fastenable to a holder (24, 26) movable along the setting strip (20, 22).

4. Device according to claim 3, wherein the holder (24, 26) is constructed in the manner of a U-shaped profile and engages by its limbs around the setting strip (20, 22) at least regionally.

5. Device according to claim 4, wherein the setting strip (20, 22) is mounted on the welding table (10, 12) to be pivotable about a pivot point (32, 34) and is fixable by means of the fixing device (36, 38) to a curved groove or gate guide (18, 19) matched to the pivot movement.

6. Device according to any one of the preceding claims 3 to 5, wherein the holder (24, 26) laterally engages by its limbs, which extend upwardly from the clamping plane (10, 12), around the setting strip (20, 22) from below and comes to lie by its profile member base, which connects the limbs, between the setting strip (20, 22) and welding table (10, 12) and wherein fixing of the holder (24, 26) with respect to the setting strip (20, 22) is carried out by means of clamping between the setting strip (20, 22) and welding table (10, 12).

7. Device according to claim 5 or 6, wherein the fixing device (36, 38) is arranged at the setting strip (20, 22) at the level of the curved groove (18, 19) and is constructed for exertion, by a fixing element (56) engaging through the curved groove (18, 19), of a clamping force (20, 22) acting on the setting strip (20, 22) substantially perpendicularly to the clamping plane (10, 12).

8. Device according to any one of the preceding claims, wherein the fixing device (34, 36) is of hydraulic, pneumatic and/or mechanical construction and is electrically actuable by means of a control device.

9. Device according to any one of the preceding claims, wherein an adjustable abutment (50), which extends substantially perpendicularly to the clamping plane (10, 12), for positioning and/or alignment of the at least one clamping part (2, 4) and for positioning and/or alignment of the profile members, which are to be connected together, in the clamping plane (10, 12) is provided.

10. Device according to any one of the preceding claims, wherein at least one pivot axis of the clamping part (2, 4) or of the associated setting strip (20, 22) coincides with the front edge of a boundary blade (14, 16) associated with the clamping plane or the plates (10, 12) thereof.

11. Method of resetting a welding device, which is provided for welding plastics material profile member parts, according to any one of the preceding claims, wherein for setting the angle at which the profile member parts are to be welded together at least one of the clamping parts (2, 4) is pivoted in the clamping plane (10, 12) in correspondence with the intended welding angle, **characterised in that** the clamping part (2, 4) is displaced in profile member longitudinal direction and brought into contact setting with an abutment (50) and fixed by means of a fixing device (36, 38) with respect to both alignment and position.

12. Method according to claim 11, wherein the abutment (50) is used not only for alignment of the clamping parts (2, 4), but also for alignment of the profile members (50) to be welded.

13. Method according to one of claims 11 and 12, wherein the welding table (10, 12) is moved into a fitting-up position for alignment of the clamping parts (2, 4) and into a working position for insertion of the profile member parts to be welded, wherein the fitting-up position and working position of the table (10, 12) differ by a predetermined weld tolerance by which the profile member ends are melted during welding.

## Revendications

1. Dispositif de soudage de profilés en matériau synthétique, comprenant au moins deux pièces de serrage (2, 4), qui sont conformées pour recevoir et fixer un profilé respectif dans un plan de serrage (10, 12) et au moyen desquelles les profilés à souder peuvent être amenés en contact, au choix, avec un élément chauffant et l'un contre l'autre par leurs extrémités, dans lequel pour régler l'angle sous lequel les extrémités des profilés doivent être soudées l'une à l'autre, au moins l'une des pièces de serrage est pivotante dans le plan de serrage (10, 12) et mobile dans la direction longitudinale du profilé, **caractérisé en ce qu'**il est prévu au moins un dispositif de fixation (36, 38) qui est conformé pour fixer l'orientation et la position de la pièce de serrage (2, 4).

2. Dispositif selon la revendication 1, dans lequel la au moins une pièce de serrage (2, 4) présente une tige de réglage (20, 22) montée à pivotement dans le plan de serrage sur une table de soudage (10, 12) et un logement de profilé (28, 30) déplaçable le long de la tige de réglage, le dispositif de fixation (36, 38) étant conformé pour fixer tant la position angulaire de la tige de réglage (20, 22) que la position du logement de profilé sur la tige de réglage (20, 22).

3. Dispositif selon la revendication 2, dans lequel le logement de profilé (28, 30) échangeable et adaptable au profilé respectif à usiner peut être fixé sur un support (24, 26) déplaçable le long de la tige de réglage (20, 22).

4. Dispositif selon la revendication 3, dans lequel le support (24, 26) se présente sous la forme d'un profilé en U et enveloppe avec ses ailes la tige de réglage (20, 22) au moins par segments.

5. Dispositif selon la revendication 4, dans lequel la tige de réglage (20, 22) est montée à pivotement sur la table de soudage (10, 12) autour d'un point d'articulation (32, 34) et peut être fixée au moyen du dispositif de fixation (36, 38) sur une rainure courbe ou coulisse (18, 19) adaptée au mouvement pivotant.

6. Dispositif selon l'une quelconque des revendications précédentes 3 à 5, dans lequel le support (24, 26), avec ses ailes s'étendant du plan de serrage (10, 12) vers le haut, enserre latéralement par le bas la tige de réglage (20, 22) et vient s'appliquer, par son fond de profilé reliant les ailes, entre la tige de réglage (20, 22) et la table de soudage (10, 12) et dans lequel une fixation du support (24, 26) par rapport à la tige de réglage (20, 22) se fait par serrage entre la tige de réglage (20, 22) et la table de soudage (10, 12).

7. Dispositif selon la revendication 5 ou 6, dans lequel le dispositif de fixation (36, 38) est ménagé sur la tige de réglage (20, 22) à hauteur de la rainure courbe (18, 19) et conformé de manière à passer avec un élément de fixation (56) à travers la rainure courbe (18, 19) pour exercer une force de serrage (20, 22) agissant de manière sensiblement perpendiculaire au plan de serrage (10, 12) sur la tige de réglage (20, 22).

8. Dispositif selon l'une quelconque des revendications précédentes, dans lequel le dispositif de fixation (34, 36) est conformé par voie hydraulique, pneumatique et/ou mécanique et peut être actionné électriquement au moyen d'un dispositif de commande.

9. Dispositif selon l'une quelconque des revendications précédentes, dans lequel on prévoit une butée (50) ajustable et s'étendant de manière sensiblement perpendiculaire au plan de serrage (10, 12) pour positionner et/ou orienter la au moins une pièce de serrage (2, 4) et positionner et/ou orienter les profilés à assembler dans le plan de serrage (10, 12).

10. Dispositif selon l'une quelconque des revendications précédentes, dans lequel au moins un axe de pivotement de la pièce de serrage (2, 4) ou de la tige de réglage correspondante (20, 22) est en coïncidence avec l'arête avant d'un couteau de limitation (14, 16) affecté au plan de serrage ou à ses plaques (10, 12).

11. Procédé pour adapter un dispositif de soudage prévu pour le soudage de profilés en matériau synthétique selon l'une quelconque des revendications précédentes, dans lequel, pour régler l'angle sous lequel les profilés doivent être soudés l'une à l'autre, au moins une des pièces de serrage (2, 4) est articulée dans le plan de serrage (10, 12) en fonction de l'angle de soudage prévu, **caractérisé en ce que** la pièce de serrage (2, 4) est déplacée dans la direction longitudinale du profilé et amenée en position d'appui avec une butée (50) et est fixée au moyen d'un dispositif de fixation (36, 38) autant en matière d'orientation que de position.

12. Procédé selon la revendication 11, dans lequel la butée (50) est employée pour orienter tant les pièces de serrage (2, 4) que les profilés à souder (50).

13. Procédé selon l'une quelconque des revendications 11 ou 12, dans lequel la table de soudage (10, 12) est mise dans une position en mode « adapté » pour orienter les pièces de serrage (2, 4) et est mise dans une position de « fonctionnement » pour mettre en place les profilés à souder, dans lequel la position en mode « adapté » diffère de celle en mode « de fonctionnement » de la table (10, 12) par la surlongueur prédéterminée, nécessaire au soudage, qui va permettre aux extrémités des profilés de fondre lors du soudage.
